# EUROPÄISCHE PATENTSCHRIFT

(11) **EP 3 298 870 B1**
(45) Veröffentlichungstag und Bekanntmachung des Hinweises auf die Patenterteilung: **13.05.2020**
(21) Anmeldenummer: 17190793.4
(22) Anmeldetag: 13.09.2017
(51) Int. Cl.: A01B 59/041, A01B 61/02

(54) **ANSCHLUSSSYSTEM FÜR LANDWIRTSCHAFTLICHE GERÄTE**
CONNECTION SYSTEM FOR AGRICULTURAL DEVICES
SYSTÈME DE CONNEXION POUR OUTILS AGRICOLES

(30) Priorität: 21.09.2016 IT 201600094674
(43) Veröffentlichungstag der Anmeldung: 28.03.2018
(73) Patentinhaber: Seppi M. spa-AG, 39052 Caldaro (IT)
(72) Erfinder: SEPPI, Lorenz, 39052 Caldaro (IT)
(74) Vertreter: Ausserer, Anton

(56) Entgegenhaltungen:
- EP-A2- 0 201 786
- EP-A2- 2 786 648
- FR-A1- 2 245 268
- FR-A1- 2 791 863
- US-A1- 2011 192 620

## Beschreibung

Die vorliegende Erfindung bezieht sich auf ein Anschlusssystem für Geräte, insbesondere für in der Landwirtschaft, im Forstbereich verwendete Geräte und im Allgemeinen für Geräte, die ein Werkzeug benutzen, die außerachsig mit mechanischen Armen zum Beispiel von Traktoren verbunden sind.

Aus der GB 653438 ist ein Anschlusssystem für ein den Boden bearbeitendes und/oder in diesem eindringendes Werkzeug an einem Traktor bekannt, das ein Dreipunktaufhängungssystem umfasst, das dem Werkzeug erlaubt, angehoben/abgesenkt zu werden und der Winkel kann somit auf diese Weise der Art eingestellt werden, dass das Werkzeug auf dem zu bearbeitenden Bereich positioniert wird. Ein sich bei der Dreipunktaufhängung stellendes Problem liegt vor, wenn das Werkzeug außerhalb der Achse arbeitet und aufgrund des au-ßerachsigen Armes ein Moment erzeugt. Das erzeugte Moment kann den Anschluss beschädigen und/oder Schläge aufnehmen, die auch den Antrieb beschädigen.

Die US 5,697,454 beschreibt einen Zusammenbau für eine Dreipunktaufhängung, der eine Verstellung des Arbeitsarmes bis zu 15 Grad gegenüber der Fahrtrichtung des Fahrzeuges erlaubt. Auch dieses System löst nicht das Problem des durch den außerachsigen Arm erzeugten Momentes.

Die EP A 2 786 648 beschreibt eine Dreipunkteaufhängung für Landwirtschaftliche/ Forstwirtschaftliche Maschine mit zusätzlichen Mittel um den Kraftmoment aufzunehmen.

Die Aufgabe der vorliegenden Erfindung liegt darin, das Dreipunktaufhängungssystem der Art zu verbessern, dass das vom außerachsig arbeitenden Werkzeug erzeugte Moment aufgenommen und nicht übertragen werden kann.

Diese Aufgabe wird durch ein Anschlusssystem gemäß dem kennzeichnenden Teil des Anspruchs 1 gelöst.

Ein Anschlusssystem nach dem Anspruch 1, zwischen einer landwirtschaftlichen, forstwirtschaftlichen oder ähnlichen Maschine und einem Werkzeugträger, umfassend eine Dreipunktaufhängung, umfasst gemäß der Erfindung zwei weitere Arme, die an einem Ende an der Achse der landwirtschaftlichen Maschine verbunden sind und am anderen Ende ein Rohr drehbar halten, das im Wesentlichen parallel zur Achse der Maschine ist, wobei das Rohr mit dem Werkzeugträger drehbar verbunden ist.

Auf diese Art und Weise überträgt das drehbare Rohr nicht das Dreh- und/oder Biegemoment, das durch das außerachsig verwendete Werkzeug erzeugt werden kann.

Vorteilhafterweise können die beiden das Rohr tragende Arme in der Länge zum Beispiel mittels von Teleskoparmen eingestellt werden.

Als Rohr wird auf nicht begrenzender Weise ein Rollkörper verstanden.

Beide Arme sind vorteilhafterweise mit der Hinterachse der Maschine mittels einer Schnellbefestigung verbunden. Vorteilhafterweise werden sie mittels Kugellagern getragen.

Weitere Merkmale und Details der Erfindung gehen aus den Patentansprüchen und aus der folgenden Beschreibung einer bevorzugten, nicht begrenzenden, in der beigefügten Zeichnung dargestellten Ausführungsform. Es zeigen:
- Figur 1: eine schematische Ansicht eines Traktors mit dem erfindungsgemäßen System, ohne Rad,
- Figur 2: eine schematische Ansicht von unten eines Traktors mit dem erfindungsgemäßen System, ohne Rad,
- Figur 3: eine schematische Seitenansicht eines Traktors mit dem erfindungsgemäßen System, ohne Rad,
- Figur 4: eine schematische Ansicht von hinten eines Traktors mit dem erfindungsgemäßen System, ohne Rad,

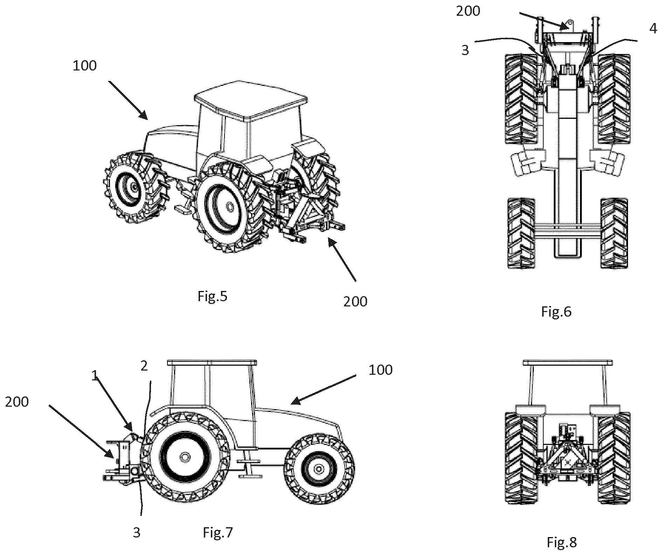

- Figur 5: eine Schaubild eines Traktors mit dem erfindungsgemäßen System,
- Figur 6: eine schematische Ansicht von unten eines Traktors mit dem erfindungsgemäßen System,
- Figur 7: eine schematische Seitenansicht eines Traktors mit dem erfindungsgemäßen System,
- Figur 8: eine schematische Ansicht von hinten eines Traktors mit dem erfindungsgemäßen System,

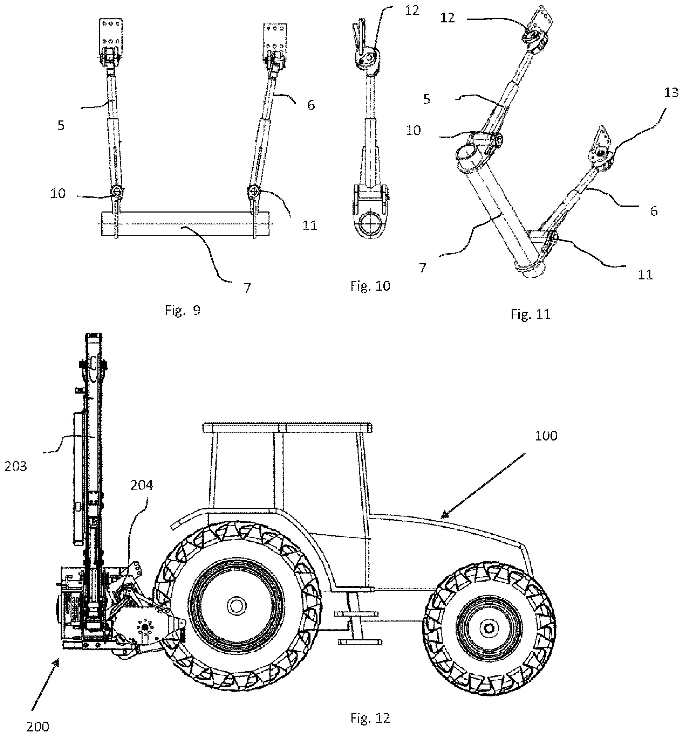

- Figur 9: ein Schaubild von Elementen des erfindungsgemäßen Systems,
- Figur 10: eine Seitenansicht von Elementen des erfindungsgemäßen Systems,
- Figur 11: eine Ansicht von oben fangen Elementen des erfindungsgemäßen Systems,
- Figur 12: eine Seitenansicht eines Traktors mit Werkzeug in zurückgezogener Position,

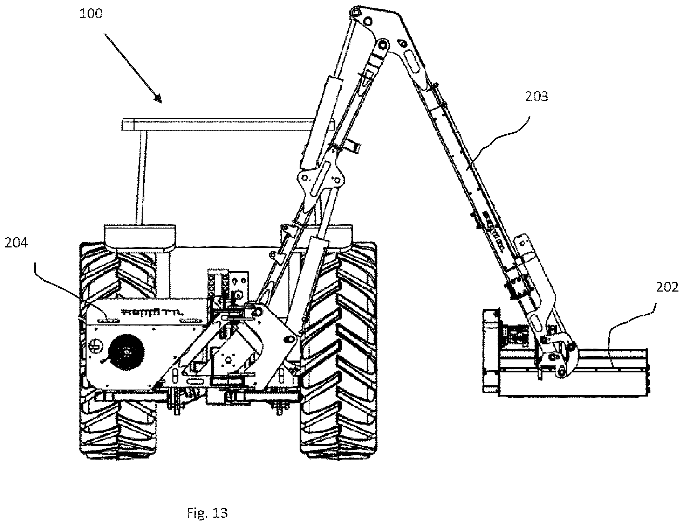

- Figur 13: eine Ansicht von hinten eines Traktors mit Werkzeug in außerachsiger Arbeitsposition, und

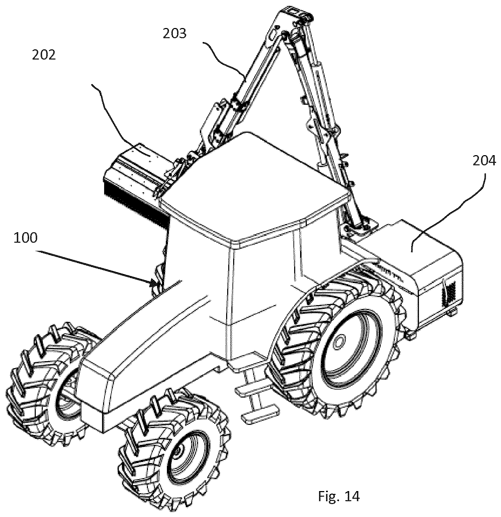

- Figur 14: ein Schaubild eines Traktors mit Werkzeug in außerachsiger Arbeitsposition.

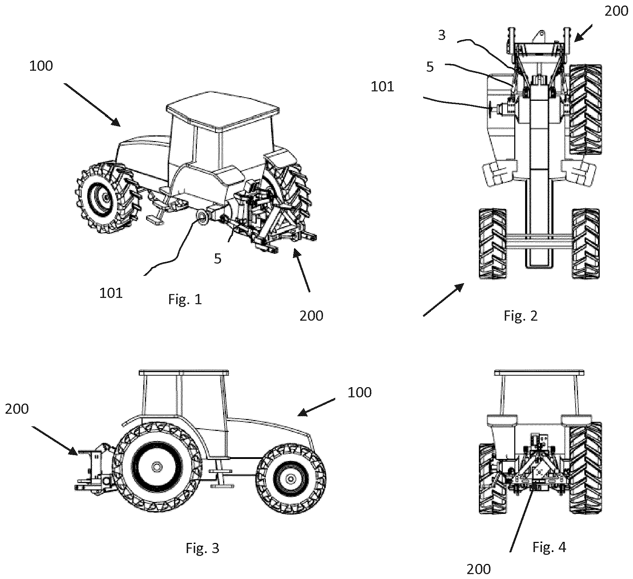

In Figur 1 mit der Bezugsziffer 100 ist ein Fahrzeug, insbesondere ein Traktor dargestellt. Dieser Traktor 100 kann einen Motor und zwei Achsen mit jeweils zwei Rädern umfassen. Am Traktor 100 ist ein Werkzeugträger 200 verbunden. Dieser Werkzeugträger umfasst bevorzugter Weise einen ausziehbaren Arm 201, der außerhalb der Traktorenachse ausziehbar ist und an dessen Enden die Arbeitswerkzeuge zum Beispiel eine Rodemaschine/Mulchmaschine 202 angeschlossen sind. Diese Rodemaschine/Mulchmaschine 202 ist im Stande, das Gras und die Sträucher am Straßenrand oder an den Hängen und an Kanälen in der Nähe des Straßenrandes zu schneiden.

Die Rodemaschine 202 oder Mulchmaschine wird als nicht begrenzendes Beispiel genommen und anstatt dessen könnte es ein beliebiges Werkzeug sein, das außerhalb der Achse arbeitet.

Das Werkzeug 202 ist mittels eines verlängerbaren und schwenkbaren Armes 203 mit der Basis 204 verbunden.

Die Ausrichtung und die Verlängerung können zum Beispiel mittels eines durch hydraulische Kolben gesteuerten Gelenkes erfolgen. Die Basis 204 ist mit der Maschine 100 mittels des erfindungsgemäßen Systems 1 verbunden.

Das erfindungsgemäße System ist aus einer Dreipunktaufhängung bekannter Art zusammengesetzt. Dieser bekannte Teil kann zum Beispiel durch mindestens einen Kolben 2 ausgeführt sein, der mit der Basis des Werkzeugträgers 204 verlängerbar und schwenkbar verbunden ist, um den Abstand und die Ausrichtung der Basis 204 einzustellen .

Das erfindungsgemäße Anschlusssystem 1 umfasst weitere zwei Arme 5, 6, die bevorzugter Weise an einem Ende mit der Hinterachse 101 der landwirtschaftlichen Maschine 100 verbunden sind und am anderen Ende einen Rollkörper 7 tragen, der im Wesentlichen parallel zur Hinterachse 101 der Maschine 100 angeordnet ist, wobei der Rollkörper mit dem Werkzeugträger 200 drehbar verbunden ist.

Vorteilhafterweise sind die beiden Arme 5, 6 mit der Achse 101 über eine Schnellbefestigung 12 verbunden und/oder von Kugellagern 13 getragen. Bevorzugter Weise ist der Rollkörper ein Rohr 7 und ist im Wesentlichen parallel zur Hinterachse 101 der Maschine 100 angeordnet.

Die Arme 5, 6 sind vorteilhafterweise in der Länge einstellbar. Bevorzugter Weise weisen die Arme 5, 6 jeweils ein für die Verbindung mit dem Rohr 7 vorgesehenes Gelenk 10, 11 auf.

Dies erlaubt eine Seitenverstellung des Rohrs 7 gegenüber der Maschine 100.

Dieses System ist in klarer Weise mittels eines Kits ausführbar, das bekannte Dreipunktaufhängungssysteme in ein Fünfpunktsystem gemäß der Erfindung abändert.

Auf diese Weise ist es möglich, die schon bekannten Systeme abzuändern, ohne dass dabei das gesamte Anschlusssystem gewechselt werden müsste.

Es ist schließlich klar, dass an dem bis jetzt beschriebenen Anschlusssystem Zusätze, Abänderungen oder Variante vorgenommen werden können, die dem Fachmann nahe liegen. Der Schutzbereich der Erfindung wird durch die beigefügten Patentansprüche definiert.

### Legende der Bezugsziffern

- 1: Anschlusssystem
- 2,3,4: Anschlusspunkte
- 5,6: Arme
- 7: Rollkörper/Rohr
- 10,11: Gelenke
- 12: Schnellbefestigung
- 13: Kugellager
- 100: landwirtschaftliche Maschinen
- 101: Hinterachse
- 200: Werkzeugträger
- 202: Werkzeuge/Rodemaschine/Mulchmaschine
- 203: Arm
- 204: Basis Werkzeugträger

## Patentansprüche

1. Anschlusssystem (1) zwischen einer landwirtschaftlichen, forstwirtschaftlichen oder ähnlichen Maschine und einem Werkzeugträger (200), umfassend eine Dreipunktaufhängung (2, 3, 4), **dadurch gekennzeichnet, dass** das Anschlusssystem (1) zwei weitere Arme (5, 6) umfasst, die an einem Ende mit der landwirtschaftlichen Maschine (100) verbindbar sind und am anderen Ende starr mit einem Rollkörper (7) verbunden sind, wobei der Rollkörper mit dem Werkzeugträger (200) drehbar verbindbar ist.

2. Anschlusssystem Anspruch 1, **dadurch gekennzeichnet, dass** die beiden Arme (5, 6) mit der Hinterachse (101) der Maschine verbindbar sind und am anderen Ende den Rollkörper (7) tragen, so dass bei Verwendung des Anschlusssystems der Rollkörper (7) in Wesentlichen parallel zur Hinterachse (101) der Maschine (100) angeordnet ist.

3. Anschlusssystem nach einem der vorstehenden Ansprüche, **dadurch gekennzeichnet, dass** der Rollkörper (7) ein Rohr ist.

4. Anschlusssystem nach einem der vorstehenden Ansprüche, **dadurch gekennzeichnet, dass** die Arme (5, 6) in der Länge einstellbare Arme sind.

5. Anschlusssystem nach einem der vorstehenden Ansprüche, **dadurch gekennzeichnet, dass** die Dreipunktaufhängung (2, 3, 4) durch mindestens einen hydraulischen ausziehbaren Kolben gebildet ist.

6. Anschlusssystem nach Anspruch 2, **dadurch gekennzeichnet, dass** es eine Schnellbefestigung (12) umfasst, wobei die Arme (5, 6) mittels der Schnellbefestigung (12) mit der Achse (101) verbindbar sind.

7. Anschlusssystem nach einem der vorstehenden Ansprüche, **dadurch gekennzeichnet, dass** an den Armen (5, 6) jeweils ein Gelenk (10, 11) angeordnet ist.

8. Kit zur Bildung eines Anschlusssystems gemäß einem der vorstehenden Ansprüche, **dadurch gekennzeichnet, dass** es mindestens zwei Arme (5, 6) umfasst, die mit einer landwirtschaftlichen, forstwirtschaftlichen oder ähnlichen Maschine (100) an einer Seite verbindbar sind und die mindestens zwei Arme (5, 6) mit einem Rollkörper (7) verbunden sind, wobei der Rollkörper mit dem Werkzeugträger (200) drehbar verbindbar ist.

9. Kit nach Anspruch 8, **dadurch gekennzeichnet, dass** die Arme (5, 6) verlängerbar sind und jeweils ein Gelenk (10, 11) aufweisen.

10. Kit nach Anspruch 9, **dadurch gekennzeichnet, dass** der Kit jeweils eine Schnellbefestigung pro Arm umfasst, so dass bei Verwendung des Kits die Verbindung mit einer landwirtschaftlichen, forstwirtschaftlichen oder ähnlichen Maschine (100) mittels jeweils einer Schnellbefestigung pro Arm (5, 6) erfolgt.

## Claims

1. A coupling system (1) between an agricultural or forestry machine or the like, and tool-holder (200) comprising a three-point hitch (2,3,4) **characterized in that** the connection system (1) comprises two additional arms (5,6), which are adapted to be connected at one end with the agricultural machine (100) and are connected at the other end with a rolling body (7), the rolling body being adapted to be rotatably connected with the tool-holder (200).

2. A coupling system as claimed in claim 1, **characterized in that** the two arms (5,6) are adapted to be connected to the rear axle (101) of the machine and carry the rolling body (7) at the other end so that, during operation of the coupling system ,the rolling body is arranged substantially parallel to the rear axle (101) of the machine (100).

3. A coupling system as claimed in any of the preceding claims, **characterized in that** the rolling body (7) is a tube.

4. A coupling system as claimed in any of the preceding claims, **characterized in that** the arms (5, 6) are length-adjustable arms.

5. A coupling system as claimed in any of the preceding claims" **characterized in that** the three-point hitch (2,3,4) is composed of at least one telescopic hydraulic piston.

6. A coupling system as claimed in claim 2, **characterized in that** it comprises a quick coupling (12), whereby the arms (5,6) are adapted to be connected to the axle by means of the quick coupling (12).

7. A coupling system as claimed in any of the preceding claims, **characterized in that** a joint (10, 11) is arranged on the arms (5, 6) respectively.

8. A kit for forming a coupling system as claimed in any of the preceding claims, **characterized in that** it comprises at least two arms (5, 6) which are adapted to be connected to an agricultural or forestry machine or the like (100) at one side and the at least two arms (5, 6) are connected to a rolling body (7), the rolling body being adapted to be rotatably connected to a tool-holder (200).

9. A kit as claimed in claim 8, **characterized in that** the arms (5, 6) are adapted to be extend and have a respective joint (10, 11).

10. A kit as claimed in claim 9, **characterized in that** the kit comprises a quick coupling for each arm respectively so that, during operation of the kit, the connection to the agricultural or forestry machine or the like (100) occurs by means of a quick of each arm (5, 6) respectively.

## Revendications

1. Système d'accouplement (1) entre une machine agricole, forestière ou similaire et un porte-outils (200) comprenant un attelage trois points (2,3,4) **caractérisé en ce que** le système d'accouplement (1) comprend deux bras supplémentaires (5,6), conçus pour se relier à une extrémité à la machine agricole (100) et se relient de façon à l'autre extrémité à un corps roulant (7), le corps roulant étant conçu pour se relier au porte-outils (200).

2. Système d'accouplement selon la revendication 1, **caractérisé en ce que** les deux bras (5,6) sont conçus pour se relier à l'essieu arrière (101) de la machine et portent le corps roulant (7) à l'autre extrémité de sorte que, pendant le fonctionnement du système d'accouplement, le corps roulant soit disposé sensiblement parallèle à l'essieu arrière (101) de la machine (100).

3. Système d'accouplement selon n'importe laquelle des revendications précédentes, **caractérisé en ce que** le corps roulant (7) est un tube.

4. Système d'accouplement selon n'importe laquelle des revendications précédentes, **caractérisé en ce que** les bras (2, 6) sont des bras à longueur réglable.

5. Système d'accouplement selon n'importe laquelle des revendications précédentes, **caractérisé en ce que** l'attelage trois points (2,3,4) est composé d'au moins un piston hydraulique télescopique.

6. Système d'accouplement selon la revendication 2, **caractérisé en ce qu'**il comprend un connecteur rapide (12), dans lequel les bras (5,6) sont conçus pour se relier à l'essieu au moyen du connecteur rapide (12).

7. Système d'accouplement selon n'importe laquelle des revendications précédentes, **caractérisé en ce qu'**une articulation (10, 11) est agencé respectivement sur les bras (5, 6).

8. Kit de formation d'un système d'accouplement selon n'importe laquelle des revendications précédentes, **caractérisé en ce qu'**il comprend au moins deux bras (5, 6) qui sont conçus pour se relier à une machine agricole, forestière ou similaire (100) d'un côté et les au moins deux bras (5,6) se relient à un corps roulant (7), le corps roulant étant conçu pour se relier de façon rotative à un porte-outils (200).

9. Kit selon la revendication 8, **caractérisé en ce que** les bras (5, 6) sont extensibles et comportent une articulation respective (10, 11).

10. Kit selon la revendication 9, **caractérisé en ce que** le kit comprend un connecteur rapide respectivement pour chaque bras, de sorte que, pendant l'utilisation du kit, le raccordement à la machine agricole ou forestière ou similaire (100) se fait resepctivement au moyen d'un connecteur rapide de chaque bras (5, 6).
